# FASCICULE DE BREVET EUROPEEN

(11) **EP 2 457 120 B1**
(45) Date de publication et mention de la délivrance du brevet: **08.01.2020**
(21) Numéro de dépôt: 09736610.8
(22) Date de dépôt: 20.07.2009
(51) Int. Cl.: G02C 5/18, G02C 11/02

(54) **BRANCHE DE LUNETTES ET LUNETTES ASSOCIEES**
BÜGEL FÜR BRILLE UND ENTSPRECHENDE BRILLE
ARM FOR SPECTACLES AND ASSOCIATED SPECTACLES

(43) Date de publication de la demande: 30.05.2012
(73) Titulaire: Killine Optical Ltd, Macao (MO)
(72) Inventeur: JACQUIER, Hervé François Serge, Lisbonne 1300-085 (PT); VERMET, Christian François Yves, Macao (MO)
(74) Mandataire: Chevalier, Renaud Philippe
(86) Numéro de dépôt international: PCT/FR2009/051439
(87) Numéro de publication internationale: WO 2011/010001

(56) Documents cités:
- EP-A1- 1 674 915
- WO-A1-00/22475
- WO-A1-91/07686
- GB-A- 2 180 664
- US-A- 5 652 635

## Description

La présente invention se rapporte à une branche de lunettes et à des lunettes équipées d'une telle branche.

De façon connue, des lunettes comportent une face, parfois appelée façade optique, pourvue de verres par exemple du type verres optiques et/ou verres solaires et/ou verres de protection et/ou verres de sécurité, ladite face étant soutenue ou non par une monture de lunettes, et deux branches de lunettes, dites branches latérales, reliées à la face ou à la monture de lunettes par l'intermédiaire d'un tenon et d'une articulation associée.

Il est d'usage qu'une branche de lunettes comporte une armature rigide réalisée notamment en acier, matériau composite ou plastique rigide, qui se compose essentiellement de deux parties, à savoir une partie avant généralement rectiligne destinée à être reliée à la face ou à la monture de lunettes, et une partie arrière généralement courbée destinée à contourner l'arrière de l'oreille et éventuellement à prendre appui sur l'oreille.

Pour modifier l'aspect des lunettes, et plus particulièrement des branches de lunettes, il est connu, notamment du document US 2009/0096982 A1, de disposer des éléments de décoration amovibles sur les branches de lunettes, avec l'inconvénient de risquer de perdre les éléments de décoration en se décrochant des branches de lunettes.

Dans un même objectif de modification de l'aspect des branches de lunettes, les documents EP 1 071 976 A1 et EP 0 901 648 A1 décrivent une branche de lunettes comportant une partie fixe et un élément décoratif entièrement rigide monté autour de la partie fixe et mobile entre deux positions par pivotement. De telles branches de décoration présentent l'inconvénient principal d'être de conception complexe et coûteuse, car nécessitant des moyens de verrouillage en position de l'élément décoratif pivotant. En outre, un tel élément décoratif ne peut être monté qu'autour d'une portion rectiligne de l'armature afin de permettre la rotation de cet élément décoratif rigide, limitant de ce fait les possibilités de positionnement de l'élément décoratif autour de ces seules portions rectilignes de l'armature.

L'état de la technique peut également être illustré par les enseignements des documents WO 00/22475 et WO 91/07686 qui divulguent le placement d'un manchon en bout de branche de façon à retenir les lunettes et empêcher qu'elles ne glissent et tombent lorsqu'elles sont portées par l'usager. Dans le document WO 00/22475, le manchon est en caoutchouc et il est monté avec jeu autour d'un tronçon d'armature sur toute sa longueur. Dans le document WO 91/07686, le manchon est élastiquement déformable et il est monté ajusté, c'est-à-dire sans jeu, autour d'un tronçon d'armature sur toute sa longueur.

La présente invention a notamment pour but de résoudre en tout ou partie les inconvénients mentionnés ci-dessus, en proposant une branche de lunettes pourvue d'au moins un élément décoratif de conception simple et peu coûteuse, facile à manipuler par l'utilisateur pour modifier l'aspect de la branche de lunettes, et sans risque de perte.

A cet effet, elle propose une branche de lunettes comprenant une armature, remarquable en ce qu'elle comporte au moins un manchon de décoration réalisé au moins partiellement dans un matériau élastiquement déformable, pourvu d'au moins une surface décorative et monté autour de l'armature de la branche, ledit manchon étant conçu pour tourner et/ou vriller autour de l'armature par déformation élastique afin de modifier l'aspect de ladite branche, où le manchon est monté autour d'un tronçon de l'armature de la branche, ledit tronçon présentant dans la direction longitudinale de la branche une portion centrale et deux portions d'extrémité, et le manchon est monté sans jeu autour de l'une au moins des portions dudit tronçon afin de permettre l'immobilisation en position du manchon autour dudit tronçon et est monté avec jeu autour de l'une au moins des portions dudit tronçon afin de faciliter la déformation élastique du manchon lorsque ledit manchon tourne autour dudit tronçon.

Ainsi, l'élément décoratif est réalisé avec le manchon de décoration qui est monté autour de l'armature, un tel manchon étant d'utilisation aisé et de conception simple et peu coûteuse car ne nécessitant aucun moyen de verrouillage spécifique. Il est entendu par surface décorative une surface munie d'un décor. Un tel décor peut se présenter sous la forme d'une couleur choisie et/ou de motifs choisies et/ou matériaux choisis. De tels motifs peuvent être réalisés sous la forme de motifs en relief et/ou de motifs en creux et/ou de motifs colorés.

En effet, une première utilisation possible du manchon se fait comme suit : le manchon est monté, plus ou moins serré, autour de l'armature dans une première position décorative où une de ces faces décoratives est exposée, puis l'utilisateur tourne le manchon autour de l'armature par déformation élastique du manchon (entraînant un mouvement de torsion du manchon) jusqu'à occuper une deuxième position décorative où une autre de ces faces décoratives est exposée, modifiant ainsi l'aspect de la branche par exposition d'une autre surface décorative ; l'élasticité du manchon autorisant ou permettant cette rotation autour de l'armature, notamment via un mouvement de torsion du manchon autour de l'armature.

Une seconde utilisation possible du manchon se fait comme suit : le manchon est monté, plus ou moins serré, autour de l'armature dans une première position décorative où une de ces faces décoratives est exposée, puis l'utilisateur tourne seulement une partie du manchon autour de l'armature par déformation élastique du manchon, vrillant ou torsadant de ce fait le manchon autour de l'armature jusqu'à occuper une deuxième position décorative où le manchon conserve sa position vrillée modifiant ainsi l'aspect du manchon et de ce fait de la branche en générale ; l'élasticité du manchon autorisant ou permettant ce vrillage autour de l'armature.

Selon une caractéristique, le manchon est pourvu d'au moins deux surfaces décoratives, ledit manchon étant conçu pour tourner et/ou vriller autour de l'armature par déformation élastique afin d'exposer l'une et/ou l'autre des surfaces décoratives.

Il est entendu par exposer l'une et/ou l'autre des surfaces décoratives le fait de positionner sur l'extérieur des branches de lunettes, à l'opposé du porteur de lunettes, l'une et/ou l'autre des surfaces décoratives afin de rendre celles-ci visibles aux personnes environnantes.

Dans le cas d'une simple rotation du manchon, l'utilisateur passe d'une surface décorative à une autre, tandis que dans le cas d'un vrillage du manchon, l'utilisateur expose plusieurs surfaces décoratives en même temps ou bien expose une seule et même surface décorative déformée par le vrillage du manchon et donc présentant un aspect distinct par rapport à la situation où le manchon n'est pas vrillé.

Dans un mode de réalisation particulier de l'invention, la branche comporte plusieurs manchons montés autour de l'armature de la branche, permettant ainsi de multiplier les possibilités de modification de l'aspect de la branche au gré de son utilisateur.

Selon une caractéristique, le manchon épouse au moins partiellement une partie arrière courbée de l'armature destinée à contourner l'arrière de l'oreille. Ce manchon présente par exemple une extrémité bouchée afin de recouvrir une extrémité libre de l'armature, de sorte que ledit manchon forme un embout monté autour de la partie arrière de l'armature.

Selon une autre caractéristique, le manchon épouse au moins partiellement une partie avant sensiblement rectiligne de l'armature destinée à être reliée à une face de lunettes.

Selon l'invention, le manchon est monté sans jeu autour de l'une au moins des portions dudit tronçon afin de permettre l'immobilisation en position du manchon autour dudit tronçon.

Dans une position décorative, le manchon épouse complètement l'armature sur au moins une portion du tronçon, assurant une bonne immobilisation en position du manchon et garantissant ainsi le maintien du manchon dans sa ou ses positions décoratives.

Le manchon peut par exemple être monté sans jeu autour de :
- la seule portion centrale ; ou
- de l'une au moins des deux portions d'extrémité ; ou
- de la portion centrale et des deux portions d'extrémités, de sorte que le manchon est monté sans jeu autour du tronçon sur toute la longueur dudit tronçon.

Selon l'invention, le manchon est monté avec jeu autour de l'une au moins des portions dudit tronçon afin de faciliter la déformation élastique du manchon lorsque ledit manchon tourne autour dudit tronçon.

Dans une position décorative, le manchon épouse partiellement l'armature sur au moins une portion du tronçon, un espace de jeu étant prévu entre le manchon et cette ou ces portions du tronçon ; ledit espace de jeu correspondant un espace du logement interne du manchon inoccupé par le tronçon.

Le manchon peut par exemple être monté avec jeu autour de :
- la seule portion centrale ; ou
- de l'une au moins des deux portions d'extrémité ; ou
- de la portion centrale et des deux portions d'extrémités, de sorte que le manchon est monté avec jeu autour du tronçon sur toute la longueur dudit tronçon.

Ainsi, le manchon est monté avec un jeu autour d'une partie de l'armature, ce qui permet de faciliter la déformation élastique du manchon lorsque l'utilisateur fait pivoter ou tord ou vrille le manchon autour de l'armature. Ce jeu diminue en effet l'effort nécessaire pour faire tourner le manchon autour de l'armature.

Dans une réalisation particulière, le manchon est :
- soit monté avec jeu autour de la portion centrale du tronçon et sans jeu autour de l'une au moins des portions d'extrémité du tronçon ;
- soit monté sans jeu autour de la portion centrale du tronçon et avec jeu autour de l'une au moins des portions d'extrémité du tronçon,
permettant ainsi de faciliter la déformation élastique du manchon lorsque l'utilisateur souhaite changer l'aspect de ces lunettes tout en garantissant son immobilisation dans la ou les positions décoratives.

Ces montages présentent également l'avantage de permettre l'alignement dudit manchon avec au moins un élément contigu audit manchon, c'est-à-dire de conserver un alignement correct entre le manchon et le ou les éléments contigus ou voisins situés de part et d'autre du tronçon d'armature une fois le manchon dans une position décorative.

Dans un mode de réalisation, le manchon présente un logement interne de section sensiblement constante, et l'une au moins des portions d'extrémité du tronçon présente une section transversale élargie relativement à la portion centrale du tronçon et de forme sensiblement complémentaire à celle du logement interne, permettant ainsi un montage avec jeu autour de la portion centrale et un montage sans jeu autour de la ou chaque portion d'extrémité.

En variante, le manchon présente également un logement interne de section sensiblement constante, et la portion centrale du tronçon présente une section transversale élargie relativement à l'une au moins des portions d'extrémité du tronçon et de forme sensiblement complémentaire à celle du logement interne, permettant ainsi un montage avec jeu autour de la ou chaque portion d'extrémité et un montage sans jeu autour de la portion centrale.

Dans un autre mode de réalisation, le tronçon est de section sensiblement constante et le manchon présente un logement interne pourvue d'une portion centrale et de deux portions d'extrémités, où l'une au moins des portions d'extrémité du logement présente une section transversale réduite relativement à la portion centrale du logement et de forme sensiblement complémentaire à celle du tronçon, permettant ainsi un montage avec jeu autour de la portion centrale du tronçon ou logement et un montage sans jeu autour de la ou chaque portion d'extrémité du tronçon ou logement.

En variante, le tronçon est également de section sensiblement constante et le manchon présente un logement interne pourvue d'une portion centrale et de deux portions d'extrémités, où la portion centrale du logement présente une section transversale réduite relativement à l'une au moins des portions d'extrémité du logement et de forme sensiblement complémentaire à celle du tronçon, permettant ainsi un montage avec jeu autour de la ou chaque portion d'extrémité du tronçon ou logement et un montage sans jeu autour de la portion centrale du tronçon ou logement.

Selon une caractéristique, le manchon est monté autour d'un tronçon de l'armature de section transversale non circulaire afin d'assurer un indexage en rotation du manchon autour de l'armature. Le manchon, réalisé au moins partiellement dans un matériau élastiquement déformable, peut ainsi tourner et/ou vriller autour du tronçon non cylindrique tout en restant plus ou moins serré autour du tronçon dans la ou les positions décoratives. Ainsi, en position décorative, le manchon n'a aucun degré de liberté en rotation ; seule une déformation élastique du manchon permettant une telle rotation et/ou vrillage.

A titre non limitatif, le tronçon présente une section transversale oblongue, par exemple de forme ellipsoïdale ou ovale, ou une section transversale polygonale, par exemple de forme carrée, rectangulaire, triangulaire, ou parallélépipédique, ou une section transversale en forme d'étoile ou de croix. De façon avantageuse, le tronçon présente des arêtes arrondies afin d'éviter d'endommager le manchon lors de son pivotement ou vrillage.

Le tronçon non cylindrique présente au moins deux surfaces de contact avec le manchon, et le manchon présente un logement interne délimité par au moins deux surfaces internes épousant au moins partiellement les surfaces de contact respectives du tronçon.

Aux surfaces de contact du tronçon peuvent correspondre autant de surfaces décoratives du manchon, de sorte qu'un tronçon avec deux surfaces de contact, présentant par exemple une section transversale ovale permet d'avoir un manchon offrant deux surfaces décoratives, un tronçon avec trois surfaces de contact, présentant par exemple une section transversale triangulaire, permet d'avoir un manchon offrant trois surfaces décoratives.

Dans le cas d'un tronçon avec seulement deux surfaces de contact, le manchon peut occuper une première position décorative dans laquelle la première, respectivement deuxième, face interne du logement du manchon épouse la première, respectivement deuxième, surface de contact du tronçon de l'armature. Après une rotation de 180° du manchon, ce dernier occupe une deuxième position décorative dans laquelle la première, respectivement deuxième, face interne du logement du manchon épouse la deuxième, respectivement première, surface de contact du tronçon de l'armature. Il est également envisageable de vriller le manchon de sorte qu'une partie de la première face interne du logement du manchon épouse la première surface de contact du tronçon, tandis qu'une seconde partie de la première face interne du logement du manchon épouse la deuxième surface de contact du tronçon.

Dans le cas d'un tronçon avec seulement trois surfaces de contact, le manchon peut occuper une première position décorative dans laquelle les respectivement première, deuxième et troisième faces internes du logement épousent respectivement les première, deuxième et troisième surfaces de contact du tronçon. Après une première rotation de 120° du manchon, ce dernier occupe une deuxième position décorative dans laquelle les respectivement première, deuxième et troisième faces internes du logement épousent respectivement les deuxième, troisième et première surfaces de contact du tronçon. Après une seconde rotation de 120° du manchon, ce dernier occupe une troisième position décorative dans laquelle les respectivement première, deuxième et troisième faces internes du logement épousent respectivement les, troisième, première et deuxième surfaces de contact du tronçon.

Il est bien entendu envisageable de prévoir un tronçon avec quatre ou plus surfaces de contact, définissant ainsi au moins quatre positions décorative du manchon lorsque ce dernier est simplement tourné, sans compter les positions induites par le vrillage du manchon.

En variante, le manchon est monté autour d'un tronçon de l'armature de section transversale circulaire, et l'adhérence entre le manchon et le tronçon est suffisante pour maintenir le manchon dans une position vrillée autour dudit tronçon. Dans ce cas de figure, le manchon peut par exemple se vriller par déformation élastique autour de ce tronçon cylindrique, le maintien en position du manchon dans une position vrillée étant essentiellement assuré par adhérence entre le manchon et l'armature.

Dans un mode de réalisation particulier, le manchon est réalisé par moulage d'au moins un matériau élastiquement déformable. Ce moulage peut par exemple être réalisé par une technique de moulage par injection.

Ainsi, le manchon peut être disposé tout le long de l'armature de branche, à différents endroits et sur des longueurs plus ou moins importantes.

Selon une possibilité de l'invention, le manchon est entièrement réalisé dans un matériau élastiquement déformable.

Selon une autre possibilité de l'invention, le manchon comprend au moins une première partie entièrement réalisée dans un matériau élastiquement déformable, et au moins une seconde partie rigide solidaire de la première partie et définissant au moins une surface décorative.

Conformément à d'autres caractéristiques :
- la première partie est réalisée sous la forme d'une bague en matériau élastiquement déformable, et la seconde partie comprend une paroi rigide fixée sur le pourtour de la première partie et qui entoure au moins partiellement ladite première partie ; ou
- la première partie et la seconde partie forment chacune une demi-bague réalisée respectivement dans un matériau élastiquement déformable et rigide, lesdites première et seconde partie étant jointes l'une à l'autre pour former ensemble le manchon ; ou
- le manchon comprend au moins deux premières parties réalisées sous la forme de bagues en matériau élastiquement déformable et au moins une seconde partie réalisée sous la forme d'une bague en matériau rigide, lesdites premières parties étant fixées sur les extrémités de la seconde partie afin d'encadrer ladite seconde partie et permettre l'immobilisation du manchon autour de l'armature.

L'invention se rapporte également à des lunettes comportant au moins une branche conforme à l'invention.

D'autres caractéristiques et avantages de la présente invention apparaîtront à la lecture de la description détaillée ci-après, de huit exemples de mise en œuvre non limitatifs, faite en référence aux figures annexées dans lesquelles :
- la figure 1 est une vue de face de lunettes conformes à un premier mode de réalisation de l'invention ;
- la figure 2a est une vue de côté des lunettes de la figure 1 illustrant le montage d'un manchon de décoration autour de l'armature de la branche ;
- la figure 2b est une vue identique à celle de la figure 2a, où le manchon de décoration a été retiré pour mettre à nu l'armature de branche ;
- les figures 3a et 3b sont des vues en coupe transversale de la branche des lunettes illustrées en figure 2a, selon les axes respectivement AA et BB, illustrant le montage du manchon de décoration autour de deux portions distinctes de l'armature de branche ;
- la figure 3c est une vue identique à celle de la figure 3b illustrant le manchon de décoration en cours de pivotement ;
- la figure 4a est une vue partielle en perspective de lunettes du même type que celles illustrées sur les figures 1 à 3, équipées de manchons de décoration autour des armatures respectives des deux branches ;
- la figure 4b est une vue identique à celle de la figure 4a, où les manchons de décoration ont été retirés pour mettre à nu les armatures des deux branches, avec l'illustration de l'un des manchons de décoration retiré ;
- la figure 5 est une vue partielle de côté de lunettes conformes à un deuxième mode de réalisation de l'invention ;
- la figure 6a est une vue en coupe transversale de la branche des lunettes illustrées en figure 5 selon l'axe CC ;
- les figures 6b et 6c sont des vues en coupe longitudinale de la branche des lunettes illustrées en figure 5, selon des plans de coupe respectivement horizontal (XY) et vertical (XZ) ;
- la figure 7 est une vue partielle de côté de lunettes conformes à un troisième mode de réalisation de l'invention ;
- la figure 8 est une vue en coupe transversale d'une branche de lunettes conforme à un quatrième mode de réalisation de l'invention ;
- la figure 9 est une vue en coupe transversale d'une branche de lunettes conforme à un cinquième mode de réalisation de l'invention ;
- la figure 10 est une vue en coupe transversale d'une branche de lunettes conforme à un sixième mode de réalisation de l'invention ;
- la figure 11a est une vue en perspective d'une branche de lunettes conforme à un septième mode de réalisation de l'invention ;
- les figures 11b et 11c sont des vues en coupe transversale de la branche de lunettes illustrée en figure 11a, selon les axes respectivement DD et EE, illustrant le montage du manchon de décoration autour de deux portions distinctes de l'armature de branche ;
- la figure 12 est une vue en coupe transversale d'une branche de lunettes conforme à un huitième mode de réalisation de l'invention.

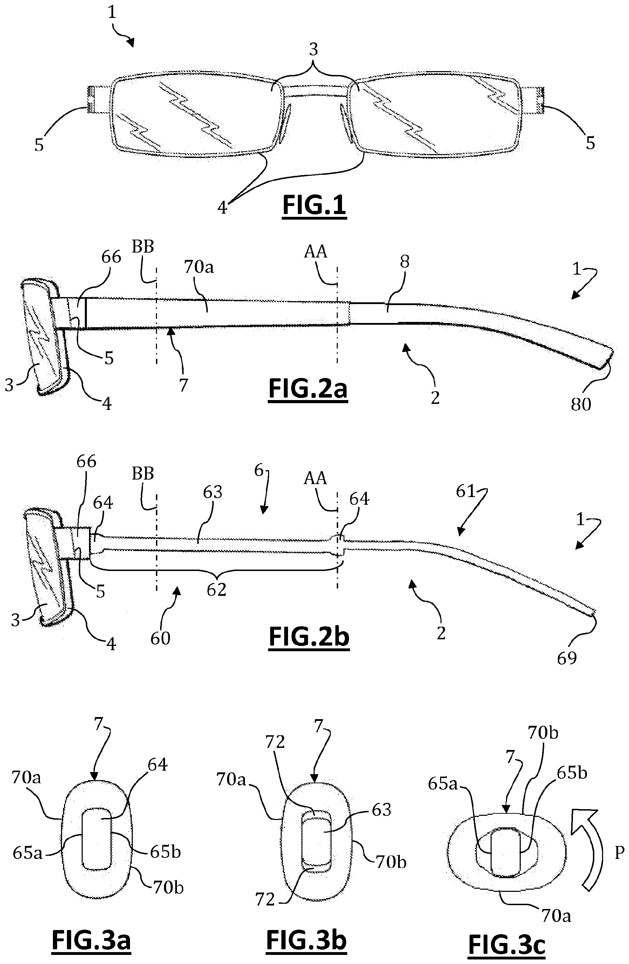

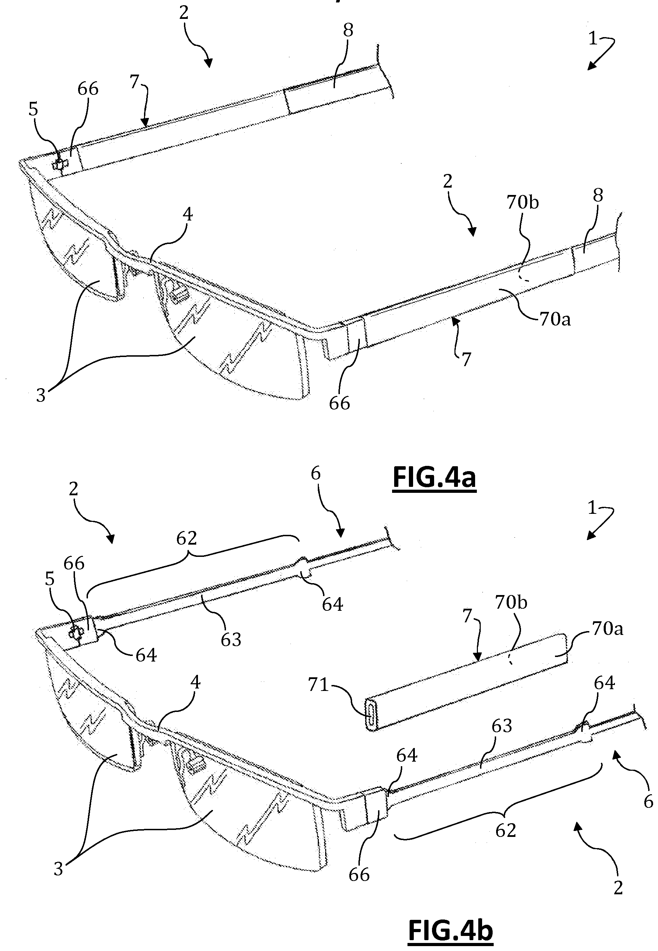

Les lunettes 1 et les branches 2 de lunettes conformes à l'invention sont décrites en référence aux figures 1 à 7 dans lesquelles les mêmes références sont employées pour illustrer des pièces identiques ou similaires.

Les lunettes 1 comprennent :
- une face 3, pourvue de verres optiques et/ou solaires, ladite face étant soutenue ou non par une monture 4 de lunettes ; et
- deux branches 2 de lunettes conformes à l'invention, dites branches latérales respectivement droite et gauche, reliées à la face 3 ou à la monture de lunettes 4 par l'intermédiaire d'un tenon et d'une articulation 5 associée.

Chaque branche 2 de lunettes comprend :
- une armature 6 rigide, réalisée notamment en acier, matériau composite ou plastique rigide, qui se compose essentiellement de deux parties, à savoir une partie avant 60 sensiblement rectiligne reliée à la face 3 ou à la monture de lunettes 4, et une partie arrière 61 courbée destinée à contourner l'arrière de l'oreille et éventuellement à prendre appui sur l'oreille ; et
- au moins un manchon 7 de décoration réalisé au moins partiellement dans un matériau élastiquement déformable, pourvu de deux surfaces décoratives 70a, 70b et monté serré autour de l'armature 6, ledit manchon 7 étant conçu pour tourner autour de l'armature 6 par déformation élastique afin d'exposer l'une ou l'autre des surfaces décoratives 70a, 70b.

Il est entendu par exposer l'une ou l'autre des surfaces décoratives 70a, 70b, le fait de positionner sur l'extérieur des branches 2 de lunettes, à l'opposé du porteur de lunettes, l'une ou l'autre des surfaces décoratives 70a, 70b afin de rendre celle-ci visible aux personnes environnantes.

Il est entendu par surface décorative une surface munie d'un décor. Un tel décor peut se présenter sous la forme d'une couleur choisie et/ou de motifs choisies. De tels motifs peuvent être réalisés sous la forme de motifs en relief et/ou de motifs en creux et/ou de motifs colorés et/ou matières.

Le ou chaque manchon 7, réalisé notamment par une technique de moulage par injection d'un matériau élastomère du type caoutchouc, se présente sous la forme d'une pièce tubulaire, élastiquement déformable, présentant un logement interne 71 sur toute la longueur du manchon 7 et dans laquelle passe l'armature 6.

Pour obtenir un manchon 7 présentant deux surfaces décoratives 70a, 70b de décors différents, il est envisageable de le réaliser par une technique de moulage par injection multi-matière, autrement dit par injection successive de matériaux de décors donnés. Il est également envisageable, en complément ou en remplacement de la technique d'injection multi-matière, d'appliquer une couche de peinture ou de vernissage sur le manchon après moulage.

La description ci-après concerne un premier mode de réalisation des lunettes 1 et branches 2, faite en référence aux figures 1 à 4.

Le manchon 7 est monté autour d'un tronçon 62 de l'armature 6, ledit tronçon 62 présentant une portion centrale 63 et deux portions d'extrémité 64 et définissant deux surfaces d'appui opposées, respectivement avant 65a (du côté opposé au porteur de lunettes) et arrière 65b (du côté du porteur de lunettes).

Le tronçon 62 est situé dans la partie avant 60 de l'armature 6. La portion centrale 63 est de section constante et de forme oblongue. Chaque portion d'extrémité 64 est de section élargie relativement à la portion centrale 63 et également de forme oblongue, c'est-à-dire que les portions d'extrémité 64 sont plus larges que la portion centrale 63.

Le logement interne 70 du manchon 7 est de section sensiblement constante, de forme oblongue, afin d'épouser au moins partiellement le tronçon 62 de l'armature 6 sur toute la longueur du tronçon 62.

Comme visible en figure 3a, le manchon 7 est monté sensiblement sans jeu autour des deux portions d'extrémité 64 du tronçon 62 afin de permettre l'alignement de ce manchon 7 avec des éléments contigus au manchon 7, disposés de part et d'autre du tronçon 62, comme par exemple un embout 8 monté autour de la partie arrière 61 de l'armature 6 et un bord avant 66 de l'armature 6 sur lequel est fixé en partie l'articulation 5. Pour cela, chaque portion d'extrémité 64 est de forme sensiblement complémentaire et de dimensions sensiblement identiques à celles du logement interne 71 afin d'épouser au plus près l'intérieur du manchon 7.

Comme visible en figure 3b, le manchon 7 est monté avec jeu autour de la portion centrale 63 du tronçon 62 afin de faciliter la déformation élastique du manchon 7 lorsque ce dernier tourne autour dudit tronçon 62 d'un demi-tour, ainsi qu'illustré en figure 3c. Pour cela, la portion centrale 63 présente des dimensions inférieures à celles du logement interne 71 afin que des jeux 72 (visibles en figure 3b) soient prévus entre la portion centrale 63 et le manchon 7 ; de tels jeux 72 permettant par la suite de diminuer l'effort nécessaire pour faire tourner le manchon 7 autour de l'armature 6, le pivotement du manchon 7 étant illustré par la flèche P en figure 3c.

Dans le cas des figure 3a et 3b, la surface décorative 70a est exposé en étant disposé du même côté que la surface d'appui avant 65a du tronçon 62, tandis que la surface décorative 70b n'est pas exposé en étant disposé du même côté que la surface d'appui arrière 65b du tronçon 62. Le pivotement P sur un demi-tour, c'est-à-dire à 180°, permet ainsi d'exposer la surface décorative 70b en l'amenant du même côté que la surface d'appui avant 65a du tronçon 62, tandis que la surface décorative 70a est dissimulé en étant amené du même côté que la surface d'appui arrière 65b du tronçon 62.

L'embout 8 peut également constituer un manchon de décoration du même type que le manchon 7 décrit ci-dessus, en étant monté autour de la partie arrière 61 de l'armature 6. Cet embout 8 est ainsi réalisé dans un matériau élastiquement déformable et se distingue du manchon 7 décrit ci-dessus en ce que l'une de ses extrémités 80 est bouché pour pouvoir recouvrir l'extrémité arrière 69 (ou extrémité libre opposée à la face 3) de l'armature 6.

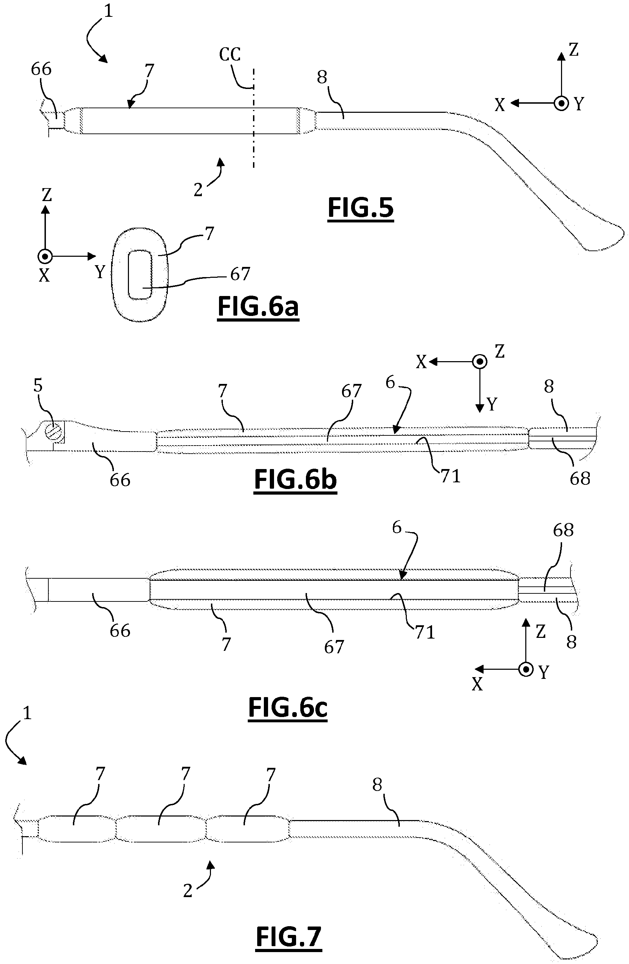

La description ci-après concerne un deuxième mode de réalisation des lunettes 1 et branches 2, faite en référence aux figures 5 à 6.

Le manchon 7 est monté autour d'un tronçon central 67 de l'armature 6. Ce tronçon central 67 est situé dans la partie avant 60 de l'armature 6, et est de section constante et de forme oblongue sur toute sa longueur. Dans ce cas là, la portion centrale et les portions d'extrémité de ce tronçon central 67 sont identiques en termes de forme et de dimensions, comparativement au tronçon 62 décrit ci-dessus pour le premier mode de réalisation.

Le tronçon central 67 est encadré par un tronçon arrière 68 de l'armature 6, autour duquel est monté l'embout 8, et un bord avant 66 de l'armature 6 sur lequel est fixé en partie l'articulation 5, où ledit bord avant 66 présente une dimension supérieure à celle du tronçon central 67.

Le logement interne 71 du manchon 7 est de section sensiblement constante et de forme oblongue.

Comme visible sur les figures 6a à 6c, le manchon 7 est monté sensiblement sans jeu autour du tronçon central 67, autrement dit le manchon 7 épouse complètement le tronçon central 67 de l'armature 6, sur toute sa longueur. Pour cela, le tronçon central 67 est de forme sensiblement complémentaire et de dimensions sensiblement identiques à celles du logement interne 71 afin d'épouser au plus près l'intérieur du manchon 7.

Ainsi, le manchon 7 est coincé entre le bord avant 66 et l'embout 8, en étant mis en butée contre le bord avant 66 et l'embout 8.

La description ci-après concerne un troisième mode de réalisation des lunettes 1 et branches 2, faite en référence à la figure 7.

Les lunettes 1 présentent plusieurs manchons 7 montés autour de l'armature 6. En l'occurrence, ces manchons 7 sont montés successivement les uns derrière les autres le long de l'armature 6. Il est bien entendu envisageable de prévoir des pièces intermédiaires montées autour de l'armature 6 et intercalées entre les manchons 7 et/ou de prévoir des tronçons intermédiaires de l'armature 6 entre les manchons 7.

La description ci-après concerne des quatrième, cinquième, sixième et septième modes de réalisation des lunettes 1 et branches 2, faite en référence aux figures respectives 8 à 11.

Dans ces modes de réalisation, le manchon 7 comprend au moins une première partie 72, 74, 76 entièrement réalisée dans un matériau élastiquement déformable, et au moins une seconde partie 73, 75, 77 rigide solidaire de la première partie 72, 74, 76 et définissant au moins une surface décorative 70c, 70d.

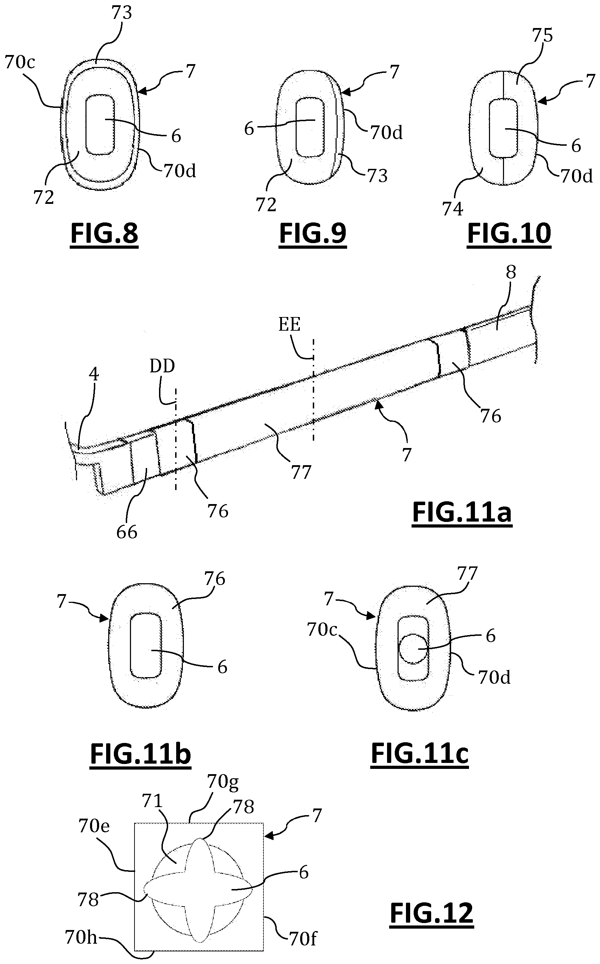

Dans le quatrième mode de réalisation illustré en figure 8, la première partie 72 est réalisée sous la forme d'une bague en matériau élastiquement déformable qui est monté autour de l'armature 6, et la seconde partie 73 est réalisée sous la forme d'une bague ou couronne rigide fixée sur le pourtour de la première partie 72 et qui entoure complètement ladite première partie 72. De la sorte, la première partie 72 forme une sorte de cœur en matière élastiquement déformable apte à se déformer suffisamment pour permettre la rotation du manchon 7 autour de l'armature 6.

Dans le cinquième mode de réalisation illustré en figure 9, la première partie 72 est également réalisée sous la forme d'une bague en matériau élastiquement déformable qui est monté autour de l'armature 6, et la seconde partie 73 est réalisée sous la forme d'une plaque rigide fixée sur le pourtour de la première partie 72 et qui entoure un côté de ladite première partie 72.

Dans le sixième mode de réalisation illustré en figure 10, la première partie 74 et la seconde partie 75 forment chacune une demi-bague réalisée respectivement dans un matériau élastiquement déformable et rigide, lesdites première et seconde partie étant jointes l'une à l'autre pour former ensemble le manchon, où la première partie 74 est apte à se déformer suffisamment pour permettre la rotation du manchon 7 complet autour de l'armature 6.

Dans le septième mode de réalisation illustré aux figures 11a à 11c, le manchon 7 comprend deux premières parties 76 réalisées sous la forme de bagues en matériau élastiquement déformable et une seconde partie 77 réalisée sous la forme d'une bague en matériau rigide. Les premières parties 76 sont fixées sur les extrémités de la seconde partie 77 afin d'encadrer ladite seconde partie 77 qui forme ainsi la partie centrale du manchon 7. Comme visible en figure 11b, les premières parties 76 sont montées autour de tronçons respectifs non cylindriques de l'armature 6 afin de permettre l'immobilisation du manchon 7 autour de l'armature 6. Comme visible en figure 11c, la seconde partie 77 rigide est montée autour de l'armature 6 de façon à pouvoir tourner autour de l'armature 6 lorsque le manchon 7 est tourné.

Bien entendu l'exemple de mise en œuvre évoqué ci-dessus ne présente aucun caractère limitatif et d'autres détails et améliorations peuvent être apportés aux branches selon l'invention, sans pour autant sortir du cadre de l'invention où d'autres formes de manchon et/ou formes d'armature peuvent être réalisées.

Par exemple, le tronçon d'armature autour duquel est monté le manchon peut être de section triangulaire, et le manchon peut présenter trois surfaces décoratives, de sorte qu'il est possible d'exposer l'une des trois surfaces décoratives par un pivotement à plus ou moins 120°.

Dans un autre exemple correspondant au huitième mode de réalisation illustré en figure 12, le tronçon de l'armature 6 autour duquel est monté le manchon 7 est présente une section transversale en forme d'étoile ou de croix à quatre branches avec des arêtes arrondies, et le manchon 7 présente une section externe carrée définissant quatre surfaces décoratives 70e, 70f, 70g, 70h, de sorte qu'il est possible d'exposer l'une des quatre surfaces décoratives par un pivotement à plus ou moins 90° ou 180°. Le manchon 7 présente un logement interne 71 quasiment cylindrique avec des espaces 78, réalisés sous la forme de rainures longitudinales ménagées dans la surface interne du manchon 7, dans lesquelles sont engagées les arêtes de l'armature 6. Ces espaces 78 assurent la fonction de centrage et d'immobilisation du manchon 7 dans les quatre positions décoratives du manchon 7.

## Revendications

1. Branche (2) de lunettes (1) comprenant une armature (6) et au moins un manchon (7 ; 8) de décoration réalisé au moins partiellement dans un matériau élastiquement déformable, pourvu d'au moins une surface décorative (70a, 70b ; 70c, 70d ; 70e, 70f, 70g, 70h) et monté autour de l'armature (6) de la branche (2), ledit manchon (7) étant conçu pour tourner et/ou vriller autour de l'armature (6) par déformation élastique afin de modifier l'aspect de ladite branche (2), où le manchon (7) est monté autour d'un tronçon (62) de l'armature de la branche, ladite branche (2) étant **caractérisée en ce que** ledit tronçon (62) présente dans la direction longitudinale de la branche (2) une portion centrale (63) et deux portions d'extrémité (64), et **en ce que** le manchon (7) est monté sans jeu autour de l'une au moins des portions dudit tronçon (62) afin de permettre l'immobilisation en position du manchon (7) autour dudit tronçon (62) et est monté avec jeu autour de l'une au moins des portions dudit tronçon (62) afin de faciliter la déformation élastique du manchon (7) lorsque ledit manchon (7) tourne autour dudit tronçon.

2. Branche (2) selon la revendication 1, dans laquelle le manchon (7) est pourvu d'au moins deux surfaces décoratives (70a, 70b), ledit manchon (7) étant conçu pour tourner et/ou vriller autour de l'armature (6) par déformation élastique afin d'exposer l'une et/ou l'autre des surfaces décoratives (70a, 70b).

3. Branche (2) selon l'une quelconque des revendications 1 ou 2, comportant plusieurs manchons (7) montés autour de l'armature (6) de la branche (2).

4. Branche (2) selon l'une quelconque des revendications 1 à 3, dans laquelle le manchon (7) épouse au moins partiellement une partie arrière (61) courbée de l'armature (6) destinée à contourner l'arrière de l'oreille.

5. Branche selon la revendication 4, dans lequel le manchon (8) présente une extrémité (80) bouchée afin de recouvrir une extrémité libre (69) de l'armature (6), de sorte que ledit manchon (8) forme un embout monté autour de la partie arrière (61) de l'armature (6).

6. Branche (2) selon l'une quelconque des revendications 1 à 3, dans laquelle le manchon (7) épouse au moins partiellement une partie avant (60) sensiblement rectiligne de l'armature (6) destinée à être reliée à une face (3) de lunettes.

7. Branche (2) selon l'une quelconque des revendications précédentes, dans laquelle le manchon (7) est soit monté avec jeu autour de la portion centrale (63) du tronçon (62) et sans jeu autour de l'une au moins des portions d'extrémité (64) du tronçon (62), soit monté sans jeu autour de la portion centrale (63) du tronçon et avec jeu autour de l'une au moins des portions d'extrémité (64) du tronçon.

8. Branche (2) selon la revendication 7, dans laquelle le manchon (7) présente un logement interne (71) de section sensiblement constante, et dans laquelle l'une au moins des portions d'extrémité (64), ou respectivement la portion centrale, du tronçon (62) présente une section transversale élargie relativement à ladite portion centrale (63), ou respectivement l'une au moins des portions d'extrémité, du tronçon (62) et de forme sensiblement complémentaire à celle du logement interne (71).

9. Branche selon la revendication 7, dans laquelle le tronçon est de section sensiblement constante et le manchon présente un logement interne pourvue d'une portion centrale et de deux portions d'extrémités, et dans laquelle l'une au moins des portions d'extrémité, ou respectivement la portion centrale, du logement présente une section transversale réduite relativement à la portion centrale, ou respectivement l'une au moins des portions d'extrémité, du logement et de forme sensiblement complémentaire à celle du tronçon.

10. Branche (2) selon l'une quelconque des revendications précédentes, dans laquelle le manchon (7) est monté autour d'un tronçon (62) de l'armature de section transversale non circulaire afin d'assurer un indexage en rotation du manchon autour de l'armature.

11. Branche selon l'une quelconque des revendications précédentes, dans laquelle le manchon est monté autour d'un tronçon de l'armature de section transversale circulaire, et dans laquelle l'adhérence entre le manchon et le tronçon est suffisante pour maintenir le manchon dans une position vrillée autour dudit tronçon.

12. Branche (2) selon l'une quelconque des revendications précédentes, dans laquelle le manchon (7) est réalisé par moulage d'au moins un matériau élastiquement déformable.

13. Branche (2) selon l'une quelconque des revendications 1 à 12, dans laquelle le manchon (7) est entièrement réalisé dans un matériau élastiquement déformable.

14. Branche (2) selon l'une quelconque des revendications 1 à 12, dans laquelle le manchon (7) comprend au moins une première partie (72 ; 74 ; 76) entièrement réalisée dans un matériau élastiquement déformable, et au moins une seconde partie (73 ; 75 ; 77) rigide solidaire de la première partie (72 ; 74 ; 76) et définissant au moins une surface décorative (70c ; 70d).

15. Branche selon la revendication 14, dans laquelle la première partie (72) est réalisée sous la forme d'une bague en matériau élastiquement déformable, et dans laquelle la seconde partie (73) comprend une paroi rigide fixée sur le pourtour de la première partie (72) et qui entoure au moins partiellement ladite première partie (72).

16. Branche selon la revendication 14, dans laquelle la première partie (74) et la seconde (75) partie forment chacune sensiblement une demi-bague réalisée respectivement dans un matériau élastiquement déformable et rigide, lesdites première (74) et seconde (75) parties étant jointes l'une à l'autre pour former ensemble le manchon.

17. Branche selon la revendication 14, dans laquelle le manchon (7) comprend au moins deux premières parties (76) réalisées sous la forme de bagues en matériau élastiquement déformable et au moins une seconde partie (77) réalisée sous la forme d'une bague en matériau rigide, lesdites premières parties (76) étant fixées sur les extrémités de la seconde partie (77) afin d'encadrer ladite seconde partie (77) et permettre l'immobilisation du manchon (7) autour de l'armature (6).

18. Lunettes (1) comportant au moins une branche (2) conforme à l'une quelconque des revendications précédentes.

## Patentansprüche

1. Bügel (2) für Brille (1), umfassend ein Gestell (6) und mindestens eine Dekorationsmanschette (7; 8), die mindestens teilweise aus einem elastisch verformbaren Material hergestellt ist, mit mindestens einer dekorativen Oberfläche (70a; 70b; 70c; 70d; 70e, 70f; 70g, 70h) versehen und um das Gestell (6) des Bügels (2) herum montiert, wobei die Manschette (7) gestaltet ist, um sich durch elastische Verformung um das Gestell (6) herum zu drehen und/oder zu verdrehen, um das Aussehen des Bügels (2) zu verändern, wobei die Manschette (7) um ein Teilstück (62) des Gestells des Bügels herum montiert ist, wobei der Bügel (2) **dadurch gekennzeichnet ist, dass** das Teilstück (62) in der Längsrichtung des Bügels (2) einen zentralen Abschnitt (63) und zwei Endabschnitte (64) aufweist, und dadurch, dass die Manschette (7) spielfrei um den mindestens einen der Abschnitte des Teilstücks (62) herum montiert ist, um die Positionsimmobilisierung der Manschette (7) um das Teilstück (62) herum zu ermöglichen, und mit einem Spiel um den mindestens einen der Abschnitte des Teilstücks (62) herum montiert ist, um die elastische Verformung der Manschette (7) zu erleichtern, wenn sich die Manschette (7) um das Teilstück herum dreht.

2. Bügel (2) nach Anspruch 1, wobei die Manschette (7) mit mindestens zwei dekorativen Oberflächen (70a, 70b) versehen ist, wobei die Manschette (7) gestaltet ist, um sich durch elastische Verformung um das Gestell (6) herum zu drehen und/oder zu verdrehen, um die eine und/oder die andere der dekorativen Oberflächen (70a, 70b) freizulegen.

3. Bügel (2) nach einem der Ansprüche 1 oder 2, mehrere Manschetten (7) beinhaltend, die um das Gestell (6) des Bügels (2) herum montiert sind.

4. Bügel (2) nach einem der Ansprüche 1 bis 3, wobei sich die Manschette (7) mindestens teilweise an einen gekrümmten hinteren Teil (61) des Gestells (6) anlegt, der dazu bestimmt ist, die Hinterseite des Ohres zu umgeben.

5. Bügel nach Anspruch 4, wobei die Manschette (8) ein verschlossenes Ende (80) aufweist, um ein freies Ende (69) des Gestells (6) zu bedecken, damit die Manschette (8) ein Endstück bildet, das um den hinteren Teil (61) des Gestells (6) herum montiert wird.

6. Bügel (2) nach einem der Ansprüche 1 bis 3, wobei sich die Manschette (7) mindestens teilweise an einen im Wesentlichen geraden vorderen Teil (60) des Gestells (6) anlegt, der dazu bestimmt ist, mit einer Seite (3) der Brille verbunden zu werden.

7. Bügel (2) nach einem der vorstehenden Ansprüche, wobei die Manschette (7) entweder mit Spiel um den zentralen Abschnitt (63) des Teilstücks (62) herum, und spielfrei um den mindestens einen der Endabschnitte (64) des Teilstücks (62) herum montiert ist, oder spielfrei um den zentralen Abschnitt (63) des Teilstücks herum, und mit Spiel um den mindestens einen der Endabschnitte (64) des Teilstücks herum montiert ist.

8. Bügel (2) nach Anspruch 7, wobei die Manschette (7) eine innere Aufnahme (71) mit im Wesentlichen konstantem Schnitt aufweist, und wobei der mindestens eine der Endabschnitte (64) oder respektive der zentrale Abschnitt des Teilstücks (62) einen in Bezug zu dem zentralen Abschnitt (63) oder respektive dem mindestens einen der Endabschnitte des Teilstücks (62) erweiterten Querschnitt und eine im Wesentlichen ergänzende Form zu jener der inneren Aufnahme (71) aufweist.

9. Bügel nach Anspruch 7, wobei das Teilstück von im Wesentlichen konstantem Schnitt ist und die Manschette eine innere Aufnahme aufweist, mit einem zentralen Abschnitt und zwei Endabschnitten versehen, und wobei der mindestens eine der Endabschnitte oder respektive der zentrale Abschnitt der Aufnahme einen in Bezug zu dem zentralen Abschnitt oder respektive dem mindestens einen der Endabschnitte der Aufnahme verringerten Querschnitt und eine im Wesentlichen ergänzende Form zu jener des Teilstücks aufweist.

10. Bügel (2) nach einem der vorstehenden Ansprüche, wobei die Manschette (7) um ein Teilstück (62) des Gestells mit einem nicht kreisförmigen Querschnitt herum montiert ist, um für eine Drehindexierung der Manschette um das Gestell herum zu sorgen.

11. Bügel nach einem der vorstehenden Ansprüche, wobei die Manschette um ein Teilstück des Gestells mit kreisförmigen Querschnitt herum montiert ist, und wobei die Haftung zwischen der Manschette und dem Teilstück ausreichend ist, um die Manschette in einer verdrehten Position um das Teilstück herum zu halten.

12. Bügel (2) nach einem der vorstehenden Ansprüche, wobei die Manschette (7) durch Abformen aus mindestens einem elastisch verformbaren Material gefertigt ist.

13. Bügel (2) nach einem der Ansprüche 1 bis 12, wobei die Manschette (7) vollständig aus einem elastisch verformbaren Material gefertigt ist.

14. Bügel (2) nach einem der Ansprüche 1 bis 12, wobei die Manschette (7) mindesten einen ersten Teil (72; 74; 76) umfasst, der vollständig aus einem elastisch verformbaren Material gefertigt ist, und mindestens einen zweiten starren Teil (73; 75; 77), der fest mit dem ersten Teil (72; 74; 76) verbunden ist und mindestens eine dekorative Oberfläche (70c; 70d) definiert.

15. Bügel nach Anspruch 14, wobei der erste Teil (72) in Form eines Ringes aus einem elastisch verformbaren Material gefertigt ist, und wobei der zweite Teil (73) eine starre Wand umfasst, die auf dem Umfang des ersten Teils (72) fixiert ist, und die den ersten Teil (72) mindestens teilweise umgibt.

16. Bügel nach Anspruch 14, wobei der erste Teil (74) und der zweite (75) Teil respektive im Wesentlichen einen halben Ring bilden, der respektive aus einem elastisch verformbaren und starren Material gefertigt ist, wobei der erste (74) und zweite (75) Teil miteinander verbunden werden, um zusammen die Manschette zu bilden.

17. Bügel nach Anspruch 14, wobei die Manschette (7) mindestens zwei erste Teile (76) umfasst, die in der Form von Ringen aus elastisch verformbarem Material gefertigt sind, und mindestens einen zweiten Teil (77), der in der Form eines Ringes aus einem starren Material gefertigt ist, wobei die ersten Teile (76) an den Enden des zweiten Teils (77) fixiert sind, um den zweiten Teil (77) zu umrahmen und die Immobilisierung der Manschette (7) um das Gestell (6) herum zu ermöglichen.

18. Brille (1), mindestens einen Bügel (2) nach einem der vorstehenden Ansprüche beinhaltend.

## Claims

1. A temple (2) for spectacles (1) comprising a frame (6) and at least one decorative sleeve (7; 8) which is at least partially made of an elastically deformable material, provided with at least one decorative surface (70a, 70b, 70c, 70d; 70e, 70f, 70g, 70h) and mounted around the frame (6) of the temple (2), said sleeve (7) being designed to rotate and/or twist around the frame (6) by elastic deformation in order to change the appearance of said temple (2), where the sleeve (7) is mounted around a segment (62) of the frame of the temple, said temple (2) being **characterized in that** said segment (62) has in the longitudinal direction of the temple (2) a central portion (63) and two end portions (64), and **in that** the sleeve (7) is mounted without clearance around at least one of the portions of said segment (62) in order to enable the immobilization of the sleeve (7) in position around said segment (62) and is mounted with clearance around at least one of the portions of said segment (62) in order to facilitate the elastic deformation of the sleeve (7) when said sleeve (7) rotates around said segment.

2. The temple (2) according to claim 1, wherein the sleeve (7) is provided with at least two decorative surfaces (70a, 70b), said sleeve (7) being designed to rotate and/or twist around the frame (6) by elastic deformation in order to expose either one of the decorative surfaces (70a, 70b).

3. The temple (2) according to any one of claims 1 or 2, including several sleeves (7) mounted around the frame (6) of the temple (2).

4. The temple (2) according to any one of claims 1 to 3, wherein the sleeve (7) at least partially conforms to a curved rear portion (61) of the frame (6) intended to circumvent the rear of the ear.

5. The temple according to claim 4, wherein the sleeve (8) has a plugged end (80) in order to cover a free end (69) of the frame (6), such that said sleeve (8) forms an endpiece mounted around the rear portion (61) of the frame (6).

6. The temple (2) according to any one of claims 1 to 3, wherein the sleeve (7) at least partially conforms to a substantially straight front portion (60) of the frame (6) intended to be connected to a spectacles face (3).

7. The temple (2) according to any one of the preceding claims, wherein the sleeve (7) is either mounted with clearance around the central portion (63) of the segment (62) and without clearance around at least one of the end portions (64) of the segment (62), or mounted without clearance around the central portion (63) of the segment and with clearance around at least one of the end portions (64) of the segment.

8. The temple (2) according to claim 7, wherein the sleeve (7) has an inner housing (71) with a substantially constant section, and wherein at least one of the end portions (64), or respectively the central portion of the segment (62) has an enlarged cross-section compared to said central portion (63), or respectively at least one of the end portions, of the segment (62) and with a shape substantially complementary to that of the inner housing (71).

9. The temple according to claim 7, wherein the segment has a substantially constant section and the sleeve has an inner housing provided with a central portion and two end portions, and wherein at least one of the end portions, or respectively the central portion, of the housing has a reduced cross-section compared to the central portion, or respectively at least one of the end portions, of the housing and with a shape substantially complementary to that of the segment.

10. The temple (2) according to any one of the preceding claims, wherein the sleeve (7) is mounted around a segment (62) of the frame with a non-circular cross-section in order to ensure a rotational indexing of the sleeve around the temple.

11. The temple according to any one of the preceding claims, wherein the sleeve is mounted around a segment of the frame with a circular cross-section, and wherein the adhesion between the sleeve and the segment is sufficient to hold the sleeve in a twisted position around said segment.

12. The temple (2) according to any one of the preceding claims, wherein the sleeve (7) is made by molding of at least one elastically deformable material.

13. The temple (2) according to any one of claims 1 to 12, wherein the sleeve (7) is entirely made of an elastically deformable material.

14. The temple (2) according to any one of claims 1 to 12, wherein the sleeve (7) comprises at least one first portion (72; 74; 76) entirely made of an elastically deformable material, and at least one second rigid portion (73; 75; 77) secured to the first portion (72; 74; 76) and defining at least one decorative surface (70c; 70d).

15. The temple according to claim 14, wherein the first portion (72) is made in the form of a ring of an elastically deformable material, and wherein the second portion (73) comprises a rigid wall fastened on the periphery of the first portion (72) and which at least partially surrounds said first portion (72).

16. The temple according to claim 14, wherein each of the first portion (74) and the second (75) portion substantially forms a half-ring made of an elastically deformable and rigid material respectively, said first (74) and second (75) portions being joined to each other to form the sleeve together.

17. The temple according to claim 14, wherein the sleeve (7) comprises at least two first portions (76) made in the form of rings of an elastically deformable material and at least one second portion (77) made in the form of a ring of a rigid material, said first portions (76) being fastened on the ends of the second portion (77) in order to frame said second portion (77) and enable the immobilization of the sleeve (7) around the frame (6).

18. Spectacles (1) including at least one temple (2) in accordance with any one of the preceding claims.
